# EUROPÄISCHE PATENTSCHRIFT

(11) **EP 3 328 805 B1**
(45) Veröffentlichungstag und Bekanntmachung des Hinweises auf die Patenterteilung: **17.02.2021**
(21) Anmeldenummer: 16744329.0
(22) Anmeldetag: 11.07.2016
(51) Int. Cl.: C03C 1/00, C01B 33/158, C03C 3/06, C03B 19/12, C01B 33/12, C01B 33/16

(54) **KONTINUIERLICHES SOL-GEL-VERFAHREN ZUR HERSTELLUNG VON QUARZGLAS**
CONTINUOUS SOL-GEL PROCESS FOR MAKING QUARTZ GLASS
PROCÉDÉ SOL-GEL CONTINUE POUR LA PREPARATION DE VERRE QUARTZEUX

(30) Priorität: 28.07.2015 EP 15178593
(43) Veröffentlichungstag der Anmeldung: 06.06.2018
(73) Patentinhaber: D. Swarovski KG, 6112 Wattens (AT)
(72) Erfinder: CZERMAK, Georg, 6112 Wattens (AT); GANDER, Matthias, 6500 Landeck (AT); STREITER, Christina, 6112 Wattens (AT); GABL, Christian, 6175 Kematen (AT); LIPP, Christian, 6134 Vomp (AT)
(74) Vertreter: Moore, Michael Richard
(86) Internationale Anmeldenummer: PCT/EP2016/066439
(87) Internationale Veröffentlichungsnummer: WO 2017/016864

(56) Entgegenhaltungen:
- EP-A1- 1 661 866
- EP-A1- 1 700 830
- EP-A1- 2 832 690
- WO-A2-2013/061104
- DE-T2- 69 915 891
- GB-A- 2 165 234
- JP-A- S62 113 737
- US-A- 4 801 318
- US-A1- 2003 151 173

## Beschreibung

### GEBIET DER ERFINDUNG

Die Erfindung befindet sich auf dem Gebiet der anorganischen Chemie und betrifft ein kontinuierliches Verfahren zur Herstellung von Quarzglas.

### STAND DER TECHNIK

Dreidimensionale Quarzglaskörper können nach dem so genannten Sol-Gel-Verfahren hergestellt werden. Das Prinzip dieses Verfahrens beruht auf einer sauer oder basisch katalysierten Hydrolyse und dem anschließenden Gelieren von Silanen, Siloxanen und Organosilanen durch Kondensationsreaktionen. Dabei geht das ursprünglich flüssige Sol über eine stabile flüssige Dispersion nanokristalliner Oxidpartikel in einen gelartigen und schließlich in den festen Zustand über. Das so erhaltene Aquagel wird anschließend zum Xerogel getrocknet und zu Quarzglas gesintert. Das Endprodukt ist glasartig. Unterschiedliche Porositäten und Morphologien können durch die Zugabe verschiedener Additive oder über das Trocknungsregime eingestellt werden. Im Gegensatz zur herkömmlichen Quarzglasherstellung durch Schmelzen der Rohstoffe bei sehr hohen Temperaturen findet die Formgebung beim Sol-Gel Verfahren bei Raumtemperatur statt. Die mit dieser Technik hergestellten Glaskörper müssen in der Regel nicht mehr nachbearbeitet werden, was sowohl zeiteffizienter als auch kostengünstiger ist.

Edukte einer Sol-Gel-Synthese sind niedermolekulare metallische Alkoxidverbindungen. Den ersten Schritt in dieser Synthese stellt die Hydrolyse der Alkoxide in Gegenwart einer Säure oder Base dar. Als Ergebnis dieses Vorgangs entstehen instabile Hydroxyverbindungen (a), die mitunter leicht oligomerisieren können Die entstandene Lösung ist ein Sol. Es besteht aus dispersen Polymerteilchen, die durch ihre Ladungen stabilisiert werden. Einzelne Verbindungen wachsen in einer Kondensationsreaktion durch die Bildung von Siloxanbrücken (Si-O-Si) zusammen (b). Dieser Prozess hält an, bis alle Monomere verbraucht sind. Es bildet sich noch kein zusammenhängendes Netzwerk. Alle entstandenen Teilchen liegen bei geeigneten Reaktionsbedingungen mit einer gleichmäßigen Größenverteilung von wenigen Nanometern vor. Die Reaktionsgeschwindigkeiten von Hydrolyse und Kondensation sind über Medium, pH-Wert und Konzentration beeinflussbar und laufen nebeneinander ab (c). Das Verfahren i*st ausführlich* von Nogami et al. in: Journal of Non-crystalline Solids, 37, S. 191-201 (1980**)** beschrieben worden.

In geeigneter Umgebung ist ein Sol mehrere Wochen, teilweise sogar Monate haltbar. Die Gelierung geschieht durch Kondensation unter Ausbildung von Siloxanbindungen. Hier ist der namengebende Schritt der Synthese erreicht, der Sol-Gel-Übergang. Aus den losen Teilchen des Sols hat sich ein dreidimensionales Netzwerk gebildet, das mit dem Lösungsmittel durchtränkt ist. Aus dem Sol ist ein Gel geworden.

Nach der erfolgten Gelierung wird das Aquagel zum Xerogel getrocknet. Durch das vollständige Verdampfen des Lösungsmittels entsteht eine stärkere Quervernetzung des gesamten Netzwerkes. Aus diesem Schritt resultiert ein kompaktes, hochvernetztes und widerstandsfähiges Material:

(a) *M*(O*R*)₄ + n H₂O → *M*(O*R*)₄₋ₙ(OH)ₙ + n *R*OH

(b) (O*R*)₃₋ₐ(OH)ₐ*M*-OH + HO-*M*(O*R*)_{3-b}(OH)_{b} → (O*R*)₃₋ₐ(OH)ₐ*M*-O-*M*(O*R*)_{3-b}(OH)_{b} + H₂O

(c) (O*R*)_{3-c}(OH)_{c}*M*-O*R* + HO-*M*(O*R*)_{3-b}(OH)_{b} → (O*R*)_{3-c}(OH)_{c}*M*-O-*M*(O*R*)_{3-b}(OH)_{b} + *R*OH

*M* = Metall oder Halbmetall, *R* = Rest
n = 1-4
a = 0-3
b = 0-3
c = 0-3

Im letzten Schritt wird das Xerogel zum Quarzglas gesintert.

Aus dem Stand der Technik ist eine Vielzahl von Verfahren bekannt, die sich mit der Quarzglasherstellung im Allgemeinen und dem Sol-Gel-Verfahren im Besonderen beschäftigen.

Aus dem Europäischen Patent EP 0131057 B1 (SEIKO) ist ein diskontinuierliches Verfahren zur Herstellung von Quarzglas bekannt, bei dem zunächst eine hydrolysierte Lösung eines Metallalkoxides der Formel *M*(O*R*)ₓ bereitgestellt wird, aus der ein Sol (kolloide Lösung) gebildet wird. Das Sol wird nach dem Gelieren zu einem Xerogel getrocknet. Anschließend wird das Xerogel zum Quarzglas gesintert.

Gemäß der Lehre des Europäischen Patentes EP 0807610 B1 (LUCENT) wird zur Bildung eines Siliciumdioxid-Sols, welches weitestgehend aus nicht agglomerierten Siliciumdioxid besteht, ein Verfahren offenbart, bei dem man eine Ausgangsmischung aus Siliciumdioxidteilchen in Wasser herstellt und aus der Mischung durch scherendes Mischen das Siliciumdioxid-Sol bildet. Dem Sol wird zur Einstellung des pH-Wertes von 6 bis 9 eine alkalische Substanz ohne Metallkation zugesetzt.

Das Europäische Patent EP 1251106 B1 (FITEL) beansprucht ein Verfahren, in dem ein Sol durch Mischen von Siliciumdioxid-Partikeln und Wasser bereit gestellt wird, wobei die Siliciumdioxid-Partikel eine Oberfläche von 5 bis 25 m²/g aufweisen, und mindestens 85 % sphärische Teilchen beinhalten und das Gewichtsverhältnis der Siliciumdioxid-Partikel zu Wasser größer als 65 % ist. Anschließend wird der pH-Wert bei 10 bis 13 mittels einer Base eingestellt und dem Sol ein Gelierungsmittel zugefügt. Als Base werden Tetramethylammoniumhydroxid und Tetraethylammoniumhydroxid verwendet.

Aus der Europäischen Patentanmeldung EP 1258457 A1 (DEGUSSA) ist ein Verfahren bekannt, bei dem ein Siliciumalkoxid hydrolysiert wird, zu welchem man dann Aerosil® Ox50 zugibt, das aufgrund seiner speziellen Eigenschaften, seiner Partikelgröße und BET eingesetzt wird.

Gegenstand des Europäischen Patentes EP 1320515 B1 (DEGUSSA) ist ein Verfahren bei dem zwei Lösungen hergestellt werden, die zur Reaktion vereinigt werden. Lösung A ist eine wässrige saure Dispersion (pH 1,5) von pyrogenen Siliciumdioxid (z.B. Aerosil® Ox50). Lösung B ist eine wässrige basische Dispersion (pH 10,5-13) mit ebenfalls pyrogenem Siliciumdioxid (z.B. Aerosil® Ox200). Das molare Verhältnis von H₂O zu SiO₂ und das molare Verhältnis der Siliciumverbindung in Lösung A zu der Siliciumverbindung in Lösung B und der resultierende pH-Wert in der Mischung C (nach Vereinigung beider Lösungen) ist die ausschlaggebenden Merkmale, um dreidimensionale Körper, die größer als 2 cm sind zu erhalten.

In der Europäischen Patentanmeldung EP 1606222 A1 (DEGUSSA) wir ein Verfahren beansprucht, bei dem man entweder ein Sol aus Siliciumalkoxid oder aus einem Siliciumalkoxid eine entsprechende Vorstufe herstellt. Anschließend wird das Sol hydrolysiert und dann kolloidales SiO₂ zugefügt.

Gemäß der Europäischen Patentanmeldung EP 1661866 A1 (EVONIK) wird eine wässrige Dispersion aus pyrogenem Siliciumdioxid (kolloidales Siliciumdioxid) vorgelegt, deren pH auf 2 bis 0,5 eingestellt wird, ehe dann TEOS hinzugegeben wird. Das so erhaltene Sol wird anschließend basisch eingestellt und in eine Form gefüllt, wo es zum Gel geliert.

In der Europäischen Patentanmeldung EP 1700830 A1 (DEGUSSA) wird ein Verfahren vorgeschlagen, bei dem zunächst eine wässrige Dispersion aus pyrogenem Metalloxid bereitgestellt wird, zu der ein Metalloxid hinzugegeben wird, das vorher durch die Zugabe von Wasser hydrolysiert wurde. Das auf diesem Weg erhaltene Sol wird anschließend in eine Form gefüllt, in welcher es geliert.

Gegenstand der Europäischen Patentanmeldung EP 1770063 A1 (DYNAX) ist ein Verfahren, das sich durch die Verwendung von Siliciumkomponenten auszeichnet, die sowohl hydrolysierbare als auch hydrophobe funktionelle Gruppen enthalten; bevorzugt ist Methyltrimethoxysilan. Es kommt ebenfalls eine pyrolytische Verbindung zum Einsatz, um die Mikrostruktur des Gels zu beeinflussen. Als mögliche Lösungsmittel werden nichtionische (z.B. Polyoxyethylenalkylether, Polyoxypropylenalkylether), kationische (Cetyltrimethylammoniumbromid oder -chlorid) oder anionische (Natriumdodecylsulfat) Tenside eingesetzt.

Das Verfahren der Europäischen Patentanmeldung EP 2064159 A1 (DEGUSSA) umfasst die folgende Schritte: Zugabe von pyrogenem Siliciumdioxid zum sauren wässrigen Medium, und anschließend Zugabe eines Siliciumalkoxids zur vorgelegten Dispersion. Das molare Verhältnis von Siliciumdioxid zu Siliciumalkoxid soll dabei von 2,5 bis 5 liegen. Es handelt sich um ein Batch-Verfahren, in dem zuerst pyrogenes Siliciumdioxid vorgelegt wird und dann das Siliciumalkoxid hinzugefügt wird.

In der Europäischen Patentanmeldung EP 2088128 A1 (DEGUSSA) wird ein Verfahren vorgeschlagen, bei dem pyrogenes Siliciumdioxid sauer eingestelltem Wasser zugesetzt und zur erhaltenen Dispersion ein Siliciumtetraalkoxid gegeben wird. Der pH-Wert wird neu eingestellt und das Gemisch in einen Container gegeben, wo das Sol zum Gel geliert. Danach wird es zu einem Xerogel getrocknet und zum Glasprodukt gesintert.

Aus der Internationalen Patentanmeldung WO 2013 061104 A2 (DEBRECENI EGYETEM) ist ein kontinuierliches Verfahren zur Herstellung von Alcogelen, Aerogelen und Xerogelen bekannt, bei dem man Silane in Gegenwart von basischen Katalysatoren und einem speziellen wässrig-organischen Lösungsmittelsystem sowie einem Gelverzögerer hydrolysiert und in die Lösung inerte Partikel einbringt.

EP 2832690 A1 (EMPA). Diese Schrift hat die Herstellung eines Aerogels zum Gegenstand, bei dem man zunächst ein Siliciumoxid-Sol in einem alkoholischen Lösungsmittel herstellt, das Sol zum Gel werden lässt, das Gel mit einem Hydrophobierungsmittel versetzt und dann das Lösungsmittel durch unterkritisches Trocknen entfernt. Das Sol muss dabei ein säurekatalytisch aktivierbares Hydrophobierungsmittel enthalten, wie beispielsweise Hexamethyldisiloxan. Dabei kann das Sol auch kontinuierlich in einem Durchflussreaktor gebildet werden.

GB 2,165,234 A (SUWA). Die Anmeldung aus dem Jahre 1984 betrifft ein Batch-Verfahren zur Herstellung von dotiertem Silicatglas. Im ersten Schritt wird ein Sol hergestellt, indem man ein Alkylsilicat beispielsweise mit Ammoniakwasser hydrolysiert und anschließend sehr fein pulverisiertes Siliciumdioxid bzw. Kieselsäure hinzugibt. Aus dem Sol wird ein Gel gewonnen, welches anschließend getrocknet und zum Glas gesintert wird. Dabei können in einem beliebigen Schritt des Verfahrens beispielsweise Germaniumalkoxide zugesetzt werden.

US 2003 151163 A1 (WANG). Dieser Schrift betrifft ein Verfahren, um Lösungsmittel aus den Poren eines Sol-Gel-Monolithen zu entfernen. Die Abbildungen 7 und 8 offenbaren dabei einen kontinuierlichen Durchflussreaktor, der seinerseits ebenfalls mit Lösungen versorgt wird, die wiederum kontinuierlich hergestellt werden.

Von Nachteil bei den diskontinuierlichen Verfahren des Standes der Technik ist, dass immer nur definierte diskrete Mengen hergestellt werden können, was zu Qualitätsunterschieden führen kann. Die batchweise Herstellung begünstigt den Einschluss von Luftblasen im Glas, was in den fertig gesinterten Produkten zu erheblichen Qualitätsminderungen führt. Weiterhin nachteilig ist die nach jedem Durchgang erforderliche umfangreiche Reinigung aller Systeme. Zusätzlich bietet ein kontinuierliches Verfahren einfachere Möglichkeiten in Richtung eines Scale-Ups.

Die Aufgabe der vorliegenden Erfindung hat darin bestanden, den oben geschilderten Nachteilen abzuhelfen. Eine Möglichkeit dafür besteht darin, die Synthese in einem kontinuierlichen Verfahren durchzuführen. Dabei lassen sich beliebige Mengen an Quarzglas hoher und stets gleichbleibender Qualität herstellen.

### BESCHREIBUNG DER ERFINDUNG

Die vorliegende Erfindung betrifft ein kontinuierliches Sol-Gel-Verfahren zur Herstellung von Quarzglas, welches die folgenden Schritte umfasst:
(a) kontinuierliches Eindosieren eines Siliciumalkoxids in einen ersten Reaktor (R1) und wenigstens anteilige Hydrolyse durch Zugabe einer wässrigen Mineralsäure unter Erhalt eines ersten Produktstroms (A);
(b) kontinuierliche Herstellung einer wässrigen Kieselsäuredispersion durch kontinuierliches Vermischen von Wasser und Kieselsäure in einem zweiten Reaktor unter Erhalt eines zweiten Produktstroms (B);
(c) kontinuierliches Vermischen der Produktströme (A) und (B) in einem dritten Reaktor (R3) zur Erzeugung eines Präsols unter Erhalt eines dritten Produktstroms (C);
(d) kontinuierliche Zugabe einer wässrigen Base zum Produktstrom (C) unter Erhalt eines Sols;
(e) kontinuierliches Abfüllen des austretenden Sols in Formen unter Erhalt eines Aquagels;
(f) Trocknen der Aquagele unter Erhalt von Xerogelen;
(g) Sinterung der Xerogele unter Erhalt von Quarzglas,
mit der Maßgabe, dass erfindungsgemäß Schritt (c) eine entgasung des Präsols vorsieht. Außerdem kann mindestens einer der Schritte (a) bis (e) zusätzlich eine Entgasung wenigstens eines darin verwendeten Einsatzstoffes vorsehen.

Es wurde gefunden, dass das neue kontinuierliche Verfahren die eingangs beschriebenen vielfältigen Probleme alle gleichzeitig und voll umfänglich löst. Abgesehen davon, dass das Verfahren die Herstellung beliebiger und daher auch stets unterschiedlicher Produktmengen erlaubt, führt die Synthese zu Produkten gleichbleibend hoher Qualität.

Ein besonders kritisches Merkmal des erfinderischen Verfahrens besteht darin, die Einsatzstoffe der Synthese im entgasten Zustand zuzuführen. Es hat sich nämlich herausgestellt, dass ohne diesen Schritt infolge veränderter Löslichkeiten in den Edukten gelöste Gase durch die Vermischung ausgetrieben werden und wie eingangs erläutert zur Blasenbildung Anlass geben. Die Entgasung kann grundsätzlich in jeder der Verfahrensschritte (a) bis (e) erfolgen, also auf der Stufe der Edukte, des Präsols, der Dispersion oder des Sols selbst. Vorzugsweise werden bereits die Edukte entgast und in dieser Form in die Synthese eingesetzt. Sicherheitshalber können sowohl die Edukte als auch das Präsol, die Dispersion oder Sol entgast werden. Erfindungsgemäß erfolgt die Entgasung in dem Verfahrensschritt (c), also auf der Stufe des Präsols.

Die Entgasung wird erfindungsgemäß vorzugsweise mit Ultraschall vorgenommen. Alternativ kommen in Betracht:
- Vakuumentgasung
- Destillation
- Unterdruck/Einfrierzyklen
- Thermische Entgasung
- Chemische Verfahren, wie z.B. Sauerstoffentfernung durch chemische Bindung;
- Gasentfernung mittels Inertgas;
- Zusatz von Entlüftungsadditiven sowie
- Zentrifugieren
oder eine Kombination von zwei oder mehrerer dieser Maßnahmen.

Zusätzlich können die Edukte gegebenenfalls durch Verwendung von Ansaugfiltern partikelfrei eingesetzt und jede Form mit frisch hergestelltem Sol befüllt werden. Durch die Vermeidung von nicht spezifikationsgerechter Ausschussware wird somit vor allem die Rentabilität des Verfahrens signifikant gesteigert, zumal lange Reinigungszeiten entfallen, insbesondere da die bevorzugt einzusetzenden Reaktoren leicht mit Spülmedien gereinigt werden können.

### SILICIUMALKOXIDE UND HYDROLYSE

Siliciumalkoxide, die im Sinne der Erfindung als Ausgangsstoffe für die Herstellung der Quarzgläser in Betracht kommen, folgen vorzugsweise der Formel (I)

Si(O*R*)₄ (I)

in der *R* für einen Alkylrest mit 1 bis 6 Kohlenstoffatomen steht. Typische Beispiele sind Tetrapropylorthosilicat und Tetrabutylorthosilicat, bevorzugt werden jedoch Tetramethylorthosilicat (TMOS) und insbesondere Tetraethylorthosilicat (TEOS) eingesetzt. Da TEOS in Wasser unlöslich ist, kann man alkoholische, speziell ethanolische Lösungen einsetzen, wobei dem Alkohol die Funktion des Phasenvermittlers zukommt. Die Siliciumalkoxide können auch weitere Siliciumverbindungen als Additive mitumfassen, wie beispielsweise Methyltriethylsilan, Dimethyldiethylsilan, Trimethylethylsilan und dergleichen.

Wenn geänderte physikalische Eigenschaften (z. B. gefärbte Quarzgläser) gewünscht sind, können der Lösung an dieser Stelle auch weitere ionische Verbindungen zugegeben werden, wie beispielsweise die der Elemente Na, Al, B, Cd, Co, Cu, Cr, Mn, Au, Ni, V, Ru, Fe, Y, Cs, Ba, Cd, Zn, Eu, La, K, Sr, Tb, Nd, Ce, Sm, Pr, Er, Tm oder Mo. Die Zugabe dieser Verbindungen kann jedoch ebenfalls zusammen mit der Kieselsäure oder aber im Zuge weiterer Schritte erfolgen.

Die saure Hydrolyse der Siliciumalkoxide erfolgt im Reaktor R1 in Gegenwart wässriger Mineralsäuren, wie Schwefelsäure, Salpetersäure, und Salzsäure oder in Gegenwart von Essigsäure. Salzsäure mit einer Konzentration von 0,01 mol/l hat sich als besonders günstig erwiesen. Das bevorzugte Volumenverhältnis von Alkoxid : Mineralsäure ist 10 : 1 bis 1 : 10, besonders bevorzugt 3 : 1 bis 1 : 3 und ganz besonders bevorzugt 2,5 : 1 bis 1 : 2,5.

Die Hydrolyse wird bei geeigneter Temperatur durchgeführt, indem die beiden Edukte mittels Pumpen gefördert, zusammengeführt und in einem temperierten Durchflussreaktor zur Reaktion gebracht werden. Bei Nichtmischbarkeit der Edukte bildet sich im Durchflussreaktor ein Slug Flow aus. Der Temperaturbereich der Hydrolyse reicht von 1 bis etwa 100 °C, wobei die bevorzugte Temperatur bei etwa 70 bis etwa 90 °C liegt.

### KIESELSÄUREN UND HERSTELLUNG DER DISPERSION

Im zweiten Schritt des Verfahrens wird in einem temperierbaren Reaktor R2 ebenfalls kontinuierlich eine wässrige Dispersion einer hochdispersen Kieselsäure hergestellt. Vorzugsweise weisen die Kieselsäuren BET-Oberflächen im Bereich von etwa 30 bis etwa 100 m²/g und insbesondere etwa 40 bis etwa 60 m²/g auf. Besonders bevorzugt ist der Einsatz des Produktes Aerosil® OX50 (EVONIK), bei dem es sich um eine pyrogene, hydrophile Kieselsäure mit einer Oberfläche von etwa 50 m²/g handelt, welche zu mehr als 99,8 Gew.-% aus SiO₂ besteht In einem temperierbaren Reaktor wird Wasser und OX50 zudosiert und mittels Dispergiergerät homogenisiert. Die Entgasung der Dispersion kann mit Hilfe einer Ultraschallbehandlung erfolgen. Der Massenanteil an OX50 in der Dispersion beträgt etwa 1-60 Gew.-%, insbesondere 33 Gew.-%. Die Dosierung von OX50 und Wasser kann beispielsweise gravimetrisch erfolgen.

### SOLBILDUNG

Während im ersten Verfahrensschritt ein erster kontinuierlicher Strom einer hydrolysierten Siliciumalkoxidverbindung hergestellt wurde und im zweiten Schritt ebenfalls kontinuierlich ein zweiter Strom einer wässrigen Kieselsäuredispersion erzeugt wurde, erfolgt nun im dritten Schritt die Vermischung der beiden Ströme und die Bildung des Präsols. Dazu werden die Produktströme (A) und (B) vor dem Reaktor R3 mittels eines geeigneten Mischsystems zusammengeführt. Die Volumenverhältnisse der beiden Ströme (A) und (B) können variabel eingestellt werden. Dadurch können die Produkteigenschaften des fertigen Quarzglases beeinflusst werden. Bevorzugtes Volumenmischungsverhältnis ist etwa 10 : 1 bis etwa 1 : 10, insbesondere bevorzugt etwa 5 : 1 bis etwa 1 : 5 und ganz besonders bevorzugt etwa 2,5 : 1 bis etwa 1 : 2,5. Das Präsol wird hier je nach Qualitätsanspruch des Quarzglases durch geeignete Entgasungsmethoden, beispielsweise Ultraschall, entgast. Die Zusammenführung der Produktströme (A) und (B) erfolgt bei Temperaturen von 1 bis etwa 100 °C, vorzugsweise etwa 10 bis etwa 50 °C und besonders bevorzugt bei Umgebungstemperatur.

Die nachfolgende Gelierung des Sols wird durch Erhöhung des pH-Wertes ausgelöst. Hierfür wird dem kontinuierlich hergestellten Präsol eine Base kontinuierlich zugeführt. Während das Hydrolyseprodukt einen pH-Wert von etwa 1 bis 2 aufweist, wird dieser durch Zugabe der Kieselsäuredispersion auf etwa 2 bis 3 angehoben. Es hat sich jedoch erwiesen, dass die Rissfestigkeit des Gels während des Schrumpfens weiter verbessert werden kann, wenn man den pH-Wert weiter anhebt, beispielsweise auf Werte im Bereich von 3 bis 9, vorzugsweise 4-6. Bei der Base kann es sich beispielsweise um Ammoniak (wässrige Lösung oder gasförmig), eine organische Aminverbindung oder auch Pyridin handeln. Alkali- oder Erdalkalibasen sind weniger bevorzugt, weil sie weitere Kationen in das Produkt einbringen, die zur Herstellung von hochreinen Quarzgläsern unerwünscht sein können.

### REAKTOREN

Auch wenn die Wahl der Reaktoren an sich unkritisch ist, hat sich doch eine Ausführungsform der Erfindung als besonders vorteilhaft erwiesen: Besonders bevorzugt ist, wenn wenigstens einer der Schritte (a), (b) oder (c) in einem Durchflussreaktor, gegebenenfalls mit vorgeschaltetem Mischelement durchgeführt wird.

In der einfachsten Ausführungsform handelt es sich bei den Reaktoren um Schläuche aus einem beständigen Material, wie beispielsweise Teflon, Polyamid, Metall, Polyethylen oder Polypropylen, die eine Länge von etwa 50 bis etwa 1 000 m, vorzugsweise etwa 100 bis etwa 800 m und besonders bevorzugt 100-500 m sowie im Mittel einen Querschnitt von etwa 1 bis etwa 10 mm, vorzugsweise etwa 1 bis etwa 5 mm aufweisen können. Diese Schläuche können spiralig aufgewunden werden, was den Platzbedarf erheblich reduziert. Die langen Wegstrecken entsprechen bei gegebener Durchflussmenge der jeweils optimalen Reaktionszeit. Solche Anordnungen sind ausgesprochen flexibel, da sich die Schlauchlängen beliebig verlängern oder kürzen lassen und mit geringem Aufwand zu reinigen sind. Eine solche Reaktionsführung kann wesentlich zur Rentabilität des Verfahrens beitragen.

### GELBILDUNG

Das Präsol wird kontinuierlich aus dem Reaktor R3 gefördert, mit Ammoniak versetzt und in Formen abgefüllt, in denen die Gelbildung stattfinden kann. Da die auf diese Weise erhaltenen Aquagele während der Alterung in der Form schrumpfen, müssen sie im Behälter leicht gleiten können. Aus diesem Grunde eignen sich hier insbesondere Behälter aus einem hydrophoben Material, wie Polyethylen, Polypropylen, Teflon, PVC oder Polystyrol.

Die Aquagele müssen zwecks Aufbereitung entformt und zu Xerogelen getrocknet werden. Die Entformung kann unter bestimmten Bedingungen, beispielsweise unter Wasser, erfolgen. Bei größeren Aquagelen kann das Ethanol durch Verweilen im Wasser teilweise durch Wasser ersetzt werden. Dies ermöglicht ein rissfreies Trocknen von größeren Aquagelen (z.B.: 8x8x8 cm). Zusätzlich kann man sich das Wasserbad auch zu Nutze machen, um diverse Elemente ins Aquagel hineindiffundieren zu lassen. Hiermit sind beispielsweise gefärbte Quarzgläser zugänglich. Die Trocknungsbedingungen werden von der Verdampfungsgeschwindigkeit des Lösungsmittels im Gel, also Wasser und Alkohol, beeinflusst. Eine Verringerung der Verdampfungsgeschwindigkeit unter Einhaltung einer geringen Verdampfungsrate trägt dazu bei, das Gel vor Rissbildungen zu bewahren. Lange Trocknungszeiten machen das Verfahren umgekehrt teurer, so dass hier ein Kompromiss gefunden werden muss.

### SINTERUNG

Die Sinterung kann in an sich bekannter Weise durchgeführt werden. Während der Sinterung werden die restlichen noch in den Xerogelen enthaltenen Lösungsmittel entfernt und die Poren im System geschlossen. Die Sintertemperatur beträgt bis zu 1 400 °C und kann bei den meisten Produkten unter Normalatmosphäre durchgeführt werden. Erfindungsgemäß bevorzugt, wird die Sinterung in folgender Weise durchgeführt:
1) Entfernung der Lösungsmittel;
2) Entfernung von ggf. enthaltenen unerwünschten organischen Verbindungen;
3) Schließung der ggf. vorhandenen Poren unter Bildung von Quarzglas.

Für die Entfernung der Lösungsmittel in Teilschritt 1 werden Temperaturen von etwa 20 °C bis etwa 200 °C verwendet, vorzugsweise etwa 70 bis etwa 150 °C und besonders bevorzugt etwa 90 bis etwa 110 °C. Die Entfernung unerwünschter organischer Verbindungen in Schritt 2, die durch Zersetzung von kohlenstoffhaltigen Edukten/Produkten entstehen, wird bei Temperaturen im Bereich von etwa 800 bis etwa 1 100 °C, vorzugsweise etwa 850 bis etwa 1050 °C und besonders bevorzugt etwa 900 bis etwa 1 000 °C durchgeführt. In Schritt 3 erfolgt die Schließung der Poren bei Temperaturen zwischen etwa 1100 bis etwa 1400 °C, vorzugsweise etwa 1150 bis etwa 1 350 °C und besonders bevorzugt etwa 1 200 bis etwa 1 300 °C.

### BEISPIEL 1

Über eine erste Pumpe wurde TEOS und über eine zweite Pumpe wässerige HCl (0,010 mol/l) zur Verfügung gestellt. Beide Einsatzstoffe waren zuvor durch Ultrabeschallung entgast worden. Die beiden Lösungen wurden über Schläuche geführt und mit Hilfe eines T-Stücks zusammengeführt. Die Mischung wies folgende Zusammensetzung auf:
TEOS 66,66 Vol.-%
HCl 33,33 Vol.-%

Die Mischung trat bei 75 °C in einen ersten PA-Schlauch (Reaktor R1) ein, der eine Länge von 300 m und einen Innendurchmesser von 2,7 mm aufwies; die Verweilzeit im Schlauch betrug etwa 30 Minuten. Der pH-Wert lag bei 1,5.

Im zweiten Reaktor wurde die OX50 Dispersion hergestellt, indem zu 1 000 g Wasser 500 g OX50 eingebracht wurden. Das Wasser war zuvor durch Ultrabeschallung entgast worden. Zwecks Homogenisierung der Dispersion kam ein Ultra Turrax zur Anwendung. Die so erhaltene Dispersion mit wOX50 von 33,33 Gew.-% wurde dann mittels Pumpe im nächsten Schritt weiter umgesetzt. Beide Ströme wurden über ein weiteres T-Stück zusammengeführt und mittels statischen Mischrohrs kontinuierlich vermischt, wobei der pH-Wert etwa 2,5 betrug. Das Präsol wurde anschließend mit Ultraschall entgast. Dem Präsol wurde dann kontinuierlich wässriges Ammoniak zudosiert, um den pH-Wert auf 4-5 einzustellen. Danach wurde das Sol sofort in Formen aus PE (2x2x2 cm) abgefüllt und diese dicht verschlossen. Nach etwa 10 Sekunden setzte die Gelierung ein. Nach einer Verweilzeit von 20 Stunden in den verschlossenen Formen wurden die Aquagele unter Wasser entformt und nach zwei Stunden im Wasserbad an Luft zu Xerogelen getrocknet. Die Xerogele wurden anschließend mittels folgender Temperaturrampe zum Quarzglas gesintert: RT-100 °C (4 h), 100 °C (3h) 100-950 °C (4h), 950 °C (2h), 950-1 250 °C (6h), 1 250 °C (1h).

## Patentansprüche

1. Kontinuierliches Sol-Gel-Verfahren zur Herstellung von Quarzglas, umfassend die folgenden Schritte:
(a) kontinuierliches Eindosieren eines Siliziumalkoxids in einen ersten Reaktor (RI) und wenigstens anteilige Hydrolyse durch Zugabe einer wässrigen Mineralsäure unter Erhalt eines ersten Produktstroms (A);
(b) kontinuierliche Herstellung einer wässrigen Kieselsäuredispersion durch kontinuierliches Vermischen von Wasser und Kieselsäure in einem zweiten Reaktor unter Erhalt eines zweiten Produktstroms (B);
(c) kontinuierliches Vermischen der Produktströme (A) und (B) aus den Schritten (a) und (b) in einem dritten Reaktor (R3) zur Erzeugung eines Präsols unter Erhalt eines dritten Produktstroms (C);
(d) kontinuierliche Zugabe einer wässrigen Base zum Produktstrom (C) aus Schritt (c) unter Erhalt eines Sols;
(e) kontinuierliches Abfüllen des austretenden Sols aus Schritt (d) in Formen unter Erhalt eines Aquagels;
(f) Trocknen der Aquagele aus Schritt (e) unter Erhalt von Xerogelen;
(g) Sinterung der Xerogele aus Schritt (f) unter Erhalt von Quarzglas,
wobei Schritt (c) zusätzlich eine Entgasung des Präsols vorsieht.

2. Verfahren nach Anspruch 1, **dadurch gekennzeichnet, dass** man die Entgasung durch Ultraschall, Vakuumentgasung, Destillation, Unterdruck/Einfrierzyklen, Thermische Entgasung, Chemische Verfahren, Gasentfernung mittels Inertgas; Zusatz von Entlüftungsadditiven sowie Zentrifugieren oder eine Kombination zweier oder mehrerer dieser Maßnahmen durchführt.

3. Verfahren nach den Ansprüchen 1 und/oder 2, **dadurch gekennzeichnet, dass** man im Schritt (a) Siliziumalkoxide einsetzt, die der Formel (I) folgen
Si(OR)4 (I)
in der R für einen Alkylrest mit 1 bis 6 Kohlenstoffatomen steht.

4. Verfahren nach mindestens einem der Ansprüche 1 bis 3, **dadurch gekennzeichnet, dass** man im Schritt (a) als Siliziumalkoxid Tetraethylorthosilikat (TEOS) einsetzt.

5. Verfahren nach mindestens einem der Ansprüche 1 bis 4, **dadurch gekennzeichnet, dass** man im Schritt (a) bezogen auf die Siliziumalkoxide etwa 1 bis etwa 60 Gew.-% Mineralsäure einsetzt.

6. Verfahren nach mindestens einem der Ansprüche 1 bis 5, **dadurch gekennzeichnet, dass** man im Schritt (a) die Hydrolyse der Siliziumalkoxide bei einer Temperatur im Bereich von etwa 1 bis etwa 100 °C durchführt.

7. Verfahren nach mindestens einem der Ansprüche 1 bis 6, **dadurch gekennzeichnet, dass** man im Schritt (b) hochdispersive Kieselsäuren einsetzt, die BET-Oberflächen im Bereich von etwa 30 bis etwa 100 m²/g aufweisen.

8. Verfahren nach mindestens einem der Ansprüche 1 bis 7, **dadurch gekennzeichnet, dass** man im Schritt (b) eine wässrige Dispersion herstellt, die etwa 1 bis etwa 60 Gew.-% Kieselsäure enthält.

9. Verfahren nach mindestens einem der Ansprüche 1 bis 8, **dadurch gekennzeichnet, dass** man die Produktströme (A) und (B) im Volumenverhältnis Alkoxid zu Kieselsäure von etwa 10 : 1 bis etwa 1:10 vermischt.

10. Verfahren nach mindestens einem der Ansprüche 1 bis 9, **dadurch gekennzeichnet, dass** man die Produktströme (A) und (B) bei Temperaturen im Bereich von etwa 0 bis etwa 80 °C vermischt.

11. Verfahren nach mindestens einem der Ansprüche 1 bis 10, **dadurch gekennzeichnet, dass** man in den Reaktor (R3) zum Präsol kontinuierlich eine Base zu dosiert.

12. Verfahren nach mindestens einem der Ansprüche 1 bis 11, **dadurch gekennzeichnet, dass** man wenigstens einen der Schritte (a), (b) oder (c) in einem Durchflussreaktor, gegebenenfalls mit vorgeschaltetem Mischelement durchführt.

13. Verfahren nach Anspruch 12, **dadurch gekennzeichnet, dass** man Durchflussreaktoren einsetzt, die eine Länge von etwa 50 bis etwa 1000 m und einen Querschnitt von etwa 1 bis 10 mm aufweisen.

14. Verfahren nach mindestens einem der Ansprüche 1 bis 13, **dadurch gekennzeichnet, dass** man die Gelbildung bei Temperaturen im Bereich von 0 bis 100 °C durchführt.

15. Verfahren nach mindestens einem der Ansprüche 1 bis 14, **dadurch gekennzeichnet, dass** man die Trocknung bei Temperaturen im Bereich von 0 bis 150 °C durchführt.

## Claims

1. Continuous sol-gel method for producing quartz glass, comprising the following steps:
(a) continuously metering a silicon alkoxide into a first reactor (RI) and carrying out at least partial hydrolysis by adding an aqueous mineral acid to obtain a first product flow (A);
(b) continuously producing an aqueous silicic acid dispersion by continuously mixing water and silicic acid in a second reactor to obtain a second product flow (B);
(c) continuously mixing the product flows (A) and (B) from steps (a) and (b) in a third reactor (R3) in order to produce a presol to obtain a third product flow (C);
(d) continuously adding an aqueous base to the product flow (C) from step (c) to obtain a sol;
(e) continuously filling the exiting sol from step (d) into moulds to obtain an aquagel;
(f) drying the aquagels from step (e) to obtain xerogels;
(g) sintering the xerogels from step (f) to obtain quartz glass,
wherein step (c) additionally includes degassing the presol.

2. Method according to claim 1, **characterised in that** the degassing is carried out by ultrasound, vacuum degassing, distillation, negative pressure/freezing cycles, thermal degassing, chemical methods, gas removal by means of inert gas; adding deaeration additives and centrifugation or a combination of two or more of these measures.

3. Method according to claim 1 and/or claim 2, **characterised in that**, in step (a), silicon alkoxides are used that follow formula (I)
Si(OR)4 (I)
in which R represents an alkyl group having 1 to 6 carbon atoms.

4. Method according to at least one of claims 1 to 3, **characterised in that**, in step (a), tetraethyl orthosilicate (TEOS) is used as silicon alkoxide.

5. Method according to at least one of claims 1 to 4, **characterised in that**, in step (a), approximately 1 to approximately 60 wt.% mineral acid is used, based on the silicon alkoxides.

6. Method according to at least one of claims 1 to 5, **characterised in that**, in step (a), the hydrolysis of the silicon alkoxides is carried out at a temperature in the range of from approximately 1 to approximately 100°C.

7. Method according to at least one of claims 1 to 6, **characterised in that**, in step (b), highly dispersive silicic acids are used that have BET surface areas in the range of from approximately 30 to approximately 100 m²/g.

8. Method according to at least one of claims 1 to 7, **characterised in that**, in step (b), an aqueous dispersion is produced which contains approximately 1 to approximately 60 wt.% silicic acid.

9. Method according to at least one of claims 1 to 8, **characterised in that** the product flows (A) and (B) are mixed in a volume ratio of alkoxide to silicic acid of approximately 10:1 to approximately 1:10.

10. Method according to at least one of claims 1 to 9, **characterised in that** the product flows (A) and (B) are mixed at temperatures in the range of from approximately 0 to approximately 80°C.

11. Method according to at least one of claims 1 to 10, **characterised in that** a base is continuously metered into the reactor (R3) to form the presol.

12. Method according to at least one of claims 1 to 11, **characterised in that** at least one of steps (a), (b) or (c) is carried out in a flow-through reactor, optionally with an upstream mixing element.

13. Method according to claim 12, **characterised in that** flow-through reactors are used which have a length of approximately 50 to approximately 1000 m and a cross section of approximately 1 to 10 mm.

14. Method according to at least one of claims 1 to 13, **characterised in that** the gel formation is carried out at temperatures in the range of from 0 to 100°C.

15. Method according to at least one of claims 1 to 14, **characterised in that** the drying is carried out at temperatures in the range of from 0 to 150°C.

## Revendications

1. Procédé sol-gel continu permettant la préparation de verre de quartz, comprenant les étapes suivantes :
(a) injection dosée continue d'un alcoxyde de silicium dans un premier réacteur (RI) et hydrolyse au moins fractionnaire par addition d'un acide minéral aqueux, ce qui permet d'obtenir un premier flux de produit (A) ;
(b) préparation continue d'une dispersion aqueuse d'acide silicique par mélange continu d'eau et d'acide silicique dans un deuxième réacteur, ce qui permet d'obtenir un deuxième flux de produit (B) ;
(c) mélange continu des flux de produit (A) et (B) issus des étapes (a) et (b) dans un troisième réacteur (R3) pour produire un pré-sol, ce qui permet d'obtenir un troisième flux de produit (C) ;
(d) addition continue d'une base aqueuse au flux de produit (C) issu de l'étape (c), ce qui permet d'obtenir un sol ;
(e) déchargement continu du sol sortant issu de l'étape (d) dans des moules, ce qui permet d'obtenir un aquagel ;
(f) séchage des aquagels issus de l'étape (e), ce qui permet d'obtenir des xérogels ;
(g) frittage des xérogels issus de l'étape (f), ce qui permet d'obtenir du verre de quartz,
l'étape (c) prévoyant en outre un dégazage du pré-sol.

2. Procédé selon la revendication 1, **caractérisé en ce que** le dégazage est réalisé par ultrasons, dégazage sous vide, distillation, cycles de pression négative/congélation, dégazage thermique, procédés chimiques, élimination de gaz au moyen d'un gaz inerte ; par ajout d'additifs de ventilation ainsi que par centrifugation ou par une association de deux ou plus de ces opérations.

3. Procédé selon les revendications 1 et/ou 2, **caractérisé en ce qu'**à l'étape (a), des alcoxydes de silicium sont utilisés, lesquels correspondent à la formule (I)
Si(OR)4 (I)
dans laquelle R représente un radical alkyle comportant 1 à 6 atomes de carbone.

4. Procédé selon au moins l'une des revendications 1 à 3, **caractérisé en ce que** l'alcoxyde de silicium utilisé à l'étape (a) est le tétraéthylorthosilicate (TEOS).

5. Procédé selon au moins l'une des revendications 1 à 4, **caractérisé en ce qu'**environ 1 à environ 60 % en poids d'un acide minéral est utilisé à l'étape (a) par rapport aux alcoxydes de silicium.

6. Procédé selon au moins l'une des revendications 1 à 5, **caractérisé en ce qu'**à l'étape (a), l'hydrolyse des alcoxydes de silicium est réalisée à une température comprise entre environ 1 et environ 100 °C.

7. Procédé selon au moins l'une des revendications 1 à 6, **caractérisé en ce qu'**à l'étape (b), des acides siliciques hautement dispersées sont utilisés, lesquels présentent des surfaces BET comprises entre environ 30 et environ 100 m²/g.

8. Procédé selon au moins l'une des revendications 1 à 7, **caractérisé en ce qu'**à l'étape (b), une dispersion aqueuse est préparée, laquelle contient environ 1 à environ 60 % en poids d'acide silicique.

9. Procédé selon au moins l'une des revendications 1 à 8, **caractérisé en ce que** les flux de produit (A) et (B) sont mélangés dans un rapport volumique d'alcoxyde à l'acide silicique d'environ 10:1 à environ 1:10.

10. Procédé selon au moins l'une des revendications 1 à 9, **caractérisé en ce que** les flux de produit (A) et (B) sont mélangés à des températures comprises entre environ 0 et environ 80 °C.

11. Procédé selon au moins l'une des revendications 1 à 10, **caractérisé en ce qu'**une base est ajoutée de manière dosée en continu au pré-sol dans le réacteur (R3).

12. Procédé selon au moins l'une des revendications 1 à 11, **caractérisé en ce qu'**au moins l'une des étapes (a), (b) ou (c) est réalisée dans un réacteur à écoulement, éventuellement avec un élément de mélange en amont.

13. Procédé selon la revendication 12, **caractérisé en ce que** des réacteurs à écoulement sont utilisés, lesquels présentent une longueur d'environ 50 à environ 1000 m et une section transversale d'environ 1 à 10 mm.

14. Procédé selon au moins l'une des revendications 1 à 13, **caractérisé en ce que** la formation de gel est réalisée à des températures comprises entre 0 et 100 °C.

15. Procédé selon au moins l'une des revendications 1 à 14, **caractérisé en ce que** le séchage est réalisé à des températures comprises entre 0 et 150 °C.
